Europäisches Patentamt

European Patent Office

Office européen des brevets

(19)

(11) **EP 1 549 000 A2**

## (12) EUROPEAN PATENT APPLICATION

(43) Date of publication:
**29.06.2005   Bulletin 2005/26**

(51) Int Cl.$^7$: **H04L 12/56**

(21) Application number: **04027318.7**

(22) Date of filing: **17.11.2004**

| | |
|---|---|
| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU**<br><br>(30) Priority: **22.12.2003 JP 2003424856** | (71) Applicant: **NEC CORPORATION**<br>**Tokyo (JP)**<br><br>(72) Inventor: **Ezaki, Kazuhiko**<br>**Kakegawa-shi Shizuoka (JP)**<br><br>(74) Representative: **VOSSIUS & PARTNER**<br>**Siebertstrasse 4**<br>**81675 München (DE)** |

(54)   **Power consumption reduction in a communication terminal transmitting images**

(57)   When operating as a transmitter, a cellular phone 1 stops transmission of image data even during execution of a video phone communication in the case where a difference (movement) Dv between the image data of two frame images that are continuous in time series is smaller than a predetermined value (specific value Th). On the other hand, when operating as a receiver, the cellular phone 1 displays a still picture by using the image data that has been finally received until receiving the new image data.

```
   IMAGE TRANSMISSION CONTROL OF
   TRANSMISSION SIDE CELLULAR TERMINAL
                 │
                 │  ┌─ S301
   ┌─────────────────────────────┐
   │ REPRODUCE IMAGE DATA OF FRAME│
   │ IMAGE ON THE BASIS OF RADIO  │
   │ SIGNAL THAT IS RECEIVED FROM │
   │ ANOTHER TERMINAL             │
   └─────────────────────────────┘
                 │  ┌─ S302
   ┌─────────────────────────────┐
   │ STORE IMAGE DATA OF REPRODUCED│
   │ FRAME IMAGE IN STORAGE DEVICE │
   │ 109                          │
   └─────────────────────────────┘
                 │  ┌─ S303
   ┌─────────────────────────────┐
   │ DISPLAY IMAGE CORRESPONDING TO│
   │ IMAGE DATA STORED IN STORAGE  │
   │ DEVICE 109 ON DISPLAY DEVICE 107│
   └─────────────────────────────┘
                 │  ┌─ S304
              ╱─────────╲        NO
   < TRANSMISSION STOP NOTICE SI RECEIVED? >──┐
              ╲─────────╱                     │
                 │ YES                        │
                 │  ┌─ S305                    │
   ┌─────────────────────────────┐            │
   │ DISPLAY IMAGE ON DISPLAY     │            │
   │ DEVICE 107 ON THE BASIS OF   │            │
   │ IMAGE DATA THAT HAS BEEN     │            │
   │ FINALLY RECEIVED FROM ANOTHER│            │
   │ TERMINAL                     │            │
   └─────────────────────────────┘            │
                 │  ┌─ S306                     │
              ╱─────────╲        NO            │
   < TRANSMISSION RESTART NOTICE TI RECEIVED? >─┤
              ╲─────────╱                       │
                 │ YES                          │
              ( RETURN )←─────────────────────┘
```

FIG.3

Printed by Jouve, 75001 PARIS (FR)

**Description**

The present invention relates to a technical field of a communication terminal that transmits and receives image data. Also, the present invention relates to a technical field of a communication terminal having, for example, a so-called video phone function.

Conventionally, in a mobile communication system that is operated by a communication operator, a second-generation cellular phone communication system using a narrow-band communication system has widely spread. A PDC/GSM system has spread as the narrow-band communication system. The PDC (personal digital cellular) is the representation of the mobile communication system of the second-generation cellular phone used in Japan. On the other hand, a GSM (global system for mobile communications) is the representation of a standard system of the second-generation cellular phone that has been standardized in Europe.

Then, in the recent years, the conventional second-generation cellular phone communication system has been shifting to a third-generation cellular phone system using a wideband communication system that is represented by a wideband-CDMA (code division multiple access) system. A so-called video phone function is one of the killer contents in the third-generation cellular phone system. The video phone function is expected to widely spread as a standard function in the communication terminal (cellular terminal) in the future.

In general, in the communication terminal such as the cellular phone on whose portability emphasis is placed, because a battery (chargeable battery) mounted for its operation is also downsized, a power capacity is restricted. For that reason, in the communication terminal, a maximal reduction in power consumption during operation has been demanded. However, in the third-generation cellular phone system, there arises a problem on the amplitude of the power consumption in the radio communication circuit of the communication terminal, which is attributable to the communication system. For that reason, there arises a problem in that the battery life of the communication terminal becomes short, and the usability of a user remarkably deteriorates. In the present specification, the battery life represents the battery lifetime of the chargeable battery that is required to be again charged by power consumption accompanied by use after the communication terminal has been charged into a fully charged state.

Also, in the communication terminal of the third-generation cellular phone system, the power consumption further increases with an additional function such as the so-called video phone function in addition to the problem on the power consumption that is attributable to the above communication system. Then, the problem on the power consumption which is attributable to the inclusion of the video phone function is caused by a sequential processing of until transmitting and receiving a photographed motion picture as image data. For that reason, in the communication terminal of the third-generation cellular phone system, it is anxious to reduce the power consumption by using some means.

By the way, JP 2001-136423 A has proposed that in order to reduce the power consumption in a communication terminal with a video phone function, when there is no change in an image photographed by a camera provided in the terminal, a power of the camera turns off.

That is, in JP 2001-136423 A, the communication terminal stores the image data of the photographed image in a storage device, and judges whether there is a change in the photographed image, or not, by comparing the stored image data with image data of a newly photographed image, during the photograph by the camera. Then, the communication terminal stops dispatching of a power to an image photographing circuit including the camera until a predetermined period of time elapses or a user conducts restart operation, when it is judged that there is no change between both of image data. Accordingly, the communication terminal disclosed in JP 2001-136423 A can suppress the useless power consumption.

However, a method of reducing the power consumption in the communication terminal according to JP 2001-136423 A suffers from the following problem.

That is, in the communication terminal according to JP 2001-136423 A, only when there is no change in the photographed image (that is, a variation between the image data to be compared is 0) , dispatching of the power to the image photographing circuit, is stopped in order to reduce the power consumption. Accordingly, a reduction effect on the total power consumption of the communication terminal is restrictive.

Also, in the communication terminal according to JP 2001-136423 A, the dispatching of the power to the camera stops when there is no change in the photographed image as described above. For that reason, in the communication terminal, after the above predetermined period of time has elapsed, or when the user conducts the restart operation, some period of time is required since the dispatching of the power to the image photographing circuit and the camera is restarted until image data of the newly photographed image is outputted. Accordingly, an operating response is low, and the operationality is not good.

Accordingly, a technique of reducing the power consumption of the communication terminal without lowering the operationality of the use has been desired.

By the way, in the case where the video phone function is a high-load function that much occupies (consumes) individual system resources in the case where it is treated as the overall system including the cellular phone and its equipment side. For that reason, in order to efficiently supply the video phone service to a larger number of users in the radio system of the cellular phone, there is something that radio traffic needs to be reduced. In this matter, in JP 2001-136423 A, even during dispatching of a power to the image photographing circuit including the camera stops (that is, no change in the image data is found) , the image data that is stored in the storage device is transmitted to a communication terminal as a receiver. Accordingly, the technique that is disclosed in JP 2001-136423 A does not obtain the reduction effect on the radio traffic.

Accordingly, there is a tendency that the radio graphic increases with a high function such as the video phone function in the radio communication system in the recent years, and a technique of reducing the radio traffic has been desired in such a radio communication system.

The present invention has been made in view of the above problems, and therefore a main object of the present invention is to efficiently reduce the power consumption of a communication terminal without deterioration of the operationality of a user.

In addition, another object of the present invention is to reduce the power consumption of a communication terminal without deterioration of the operationality of a user; and to reduce radio traffic in a radio communication system.

That is, according to the present invention, there is provided a method of reducing power consumption in a communication terminal that transmits and receives image data, including: stopping transmission of new image data from a transmission side communication terminal (1A) to a reception side communication terminal (1B) in a duration where a difference between image data inputted in time series is smaller than a predetermined value; and displaying an image, on the reception side communication terminal (1B), on the basis of image data that has already been received in a duration where the reception side communication terminal cannot receive the new image data from the transmission side communication terminal (1A).

In a preferred embodiment, the image displayed on the reception side communication terminal (1B) is a still picture based on the latest image data that is received before the reception side communication terminal (1B) cannot receive the new image data.

In addition, input image data to be compared with the predetermined value is, for example, image data of two frame images in question among image data of a plurality of frame images that are inputted in time series, and the image data of two frame images in question is, for example, image data of two frame images that are continuous in time series, or image data of two frame images that are at a predetermined frame interval among the image data of a plurality of frame images that are inputted in time series.

The above object is achieved even by a communication system that corresponds to the power consumption reducing method in the communication terminal having each of the above structures, and the communication terminal that constitutes the communication system.

Also, the above object is achieved even by a computer program that realizes the above communication terminal by means of a computer, and a computer readable storage medium in which the computer program is stored.

Other features and advantages of the present invention will be apparent from the following description taken in conjunction with the accompanying drawings, in which like reference characters designate the same or similar parts throughout the figures thereof.

The above and other objects, features and advantages of the present invention will become more apparent from the following detailed description when taken in conjunction with the accompanying drawings wherein:

FIG. 1 is a block diagram showing a structure of a cellular phone in accordance with an embodiment of the present invention;

FIG. 2 is a flowchart showing an image transmission control process which is performed by a cellular phone in this embodiment; and

FIG. 3 is a flowchart showing an image reception control process which is performed by the cellular phone in this embodiment.

Preferred embodiments of the present invention will now be described in detail in accordance with the accompanying drawings.

Hereinafter, a description will be given in more detail of a cellular phone which is a typical communication terminal according to an embodiment of the present invention with reference to the accompanying drawings.

First of all, in this embodiment, in order to realize a reduction in the power consumption of the cellular phone and a reduction in the radio traffic in a radio communication system that accommodates the cellular phone, attention is paid to the following points.

An attempt has been made to spread the video phone function in the third-generation cellular phone system using the wideband communication system under the above circumstances as described above. The wideband CDMA communication system, which is one example of the wideband communication system, is of a system that spreads a signal energy to a frequency band that is far wider than the band width of the information to perform communication. A spreading factor SF in the wideband CDMA communication system is in the range of 4 to 512. In the present specification, the spreading factor SF has the following relationship:

$$ST = T \text{ (bit section)}/Tc \text{ (chip section)}$$

In the communication system, one chip section represented by $Tc$ is a fixed value. Then, a one-bit information section represented by $T$ is variable according to the amount of communicated information. Accordingly, in the case where the amount of information to be communicated is small, a data rate is lowered so that communication can be performed. For that reason, since T per Tc becomes long, the spreading factor SF becomes resultantly a large value. Then, in the case where the spreading factor SF is larger, because more chips (unit power) are required in transmission of data of one symbol, a power peak of a desired wave after dispreading becomes large.

From the above viewpoint, in the wideband CDMA communication system, the power peak after dispreading at a reception side communication terminal can ensure a sufficient level as required even in the case where the radio transmission power is lowered by positively reducing the amount of information to be transmitted. Then, a reduction in the radio transmission power at a transmission side communication terminal means a reduction in the power consumption of the communication terminal.

In addition, an SIR (signal interference ratio) of another communication terminal having the transmission wave of the communication terminal as an undesired wave is relatively improved as the radio transmission power of the transmission side communication terminal is lowered. As a result, this contributes to the efficient use of a limited line subscriber capacity of the overall radio communication system.

As described above, it is found that a reduction in the radio transmission power of the transmission side communication terminal contributes not to only a reduction in the power consumption of the communication terminal but also a reduction in the radio traffic as the overall communication system. Then, a cellular phone 1 according to this embodiment has a structure for realizing the above knowledge. Hereinafter, its structure will be described.

(Description of device structure and operation)

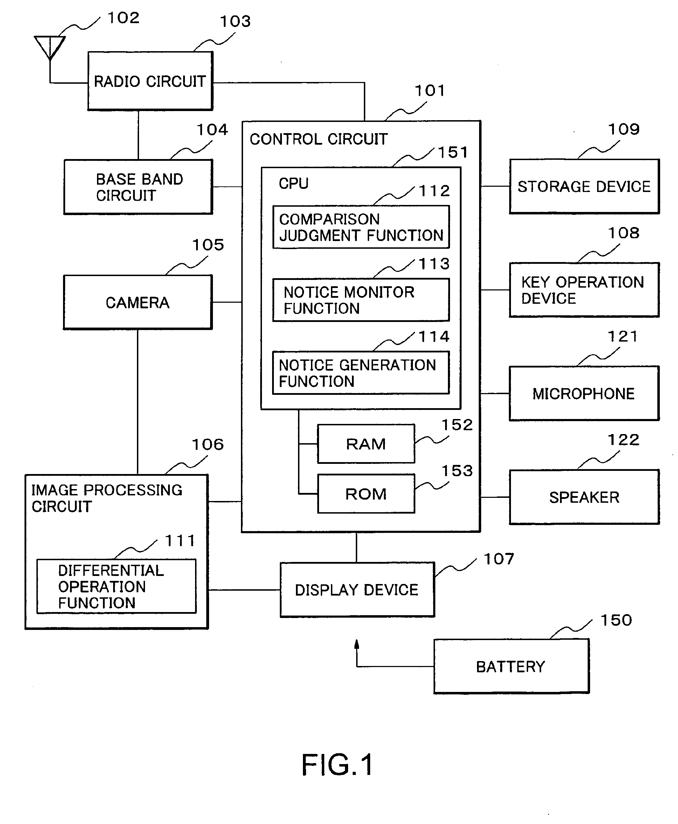

First, the device structure of the cellular phone according to this embodiment will be described. FIG. 1 is a block diagram showing the structure of a cellular phone according to an embodiment of the present invention. The cellular phone 1 shown in the figure is a cellular phone (mobile communication terminal) having a so-called video phone function.

The cellular phone 1 includes, as shown in FIG. 1, a control circuit 101, an antenna 102, a radio circuit 103, a base band circuit 104, a camera (image pickup device) 105, an image processing circuit 106, a display device 107, a key operation device 108, a storage device (image memory) 109, a microphone 121, a speaker 122, and a battery 150. The cellular phone 1 is operated by an electric power that is supplied from a battery (chargeable battery) 150.

The control circuit 101 includes a CPU (central processing unit) 151, a RAM (random access memory) 152, a ROM (read only memory) 153, and peripheral circuits (not shown). In this embodiment, the control circuit 101 controls the entire operation (the video phone function, a communication function such as transmission and reception of e-mail, etc. ) of the cellular phone 1 having the structure shown in FIG. 1. In this situation, the CPU 151 executes a software program group that is read out of the ROM 53 while using the RAM 152 as a work area. In particular, the CPU 151 executes the respective programs of a comparison judgment function 112, a notice monitor function 113, and a notice generation function 114 so as to realize the characteristic transmission and reception operation in this embodiment (which will be described in more detail later).

Then, the outline of the operation that is realized by the cellular phone 1 will be described. The cellular phone 1 transmits and receives image data and voice data with respect to another cellular phone 1 that is a communicated party during calling at the time when the video phone function is executed. Accordingly, the cellular phone 1 functions not only as a transmission side communication terminal but also as a reception side communication terminal.

In the following description, for convenience of description, in the case of emphasizing that the cellular phone 1 having the above device structure is a transmission side communication terminal, the cellular phone 1 may be called "cellular phone 1A", and in the case of emphasizing that the cellular phone 1 is a reception side communication terminal, the cellular phone 1 may be called "cellular phone 1B".

The key operation device 108 is an input device such as a ten key or a pointing device via which a user inputs a variety of operations. In this embodiment, the user starts a communication operation through the video phone communication by using the key operation device 108. In this situation, the camera 105 starts the photograph of a moving picture on the basis of an instruction from the control circuit 101. The camera 105 is an image pickup device using an image pickup device such as a CCD (charge coupled device) or a CMOS (complementary metal-oxide semiconductor). The camera 105 inputs an image signal (image data) of a frame unit which represents a photographed image to the image processing circuit 106 in time series. The control circuit 101 transmits image data of the photographed image and voice data that represents a voice that is inputted from the microphone 121 to the cellular phone 1B through the base band circuit 104, the radio circuit 103, and the antenna 102.

The image processing circuit 106 has a differential operation function 111. The differential operation function 111 calculates a variation (difference) Dv of a position of an object to be photographed at real time on the basis of image data of two frame images which are inputted to the image processing circuit 106 from the camera 105 in time series. In this situation, the object to be photographed by the camera 105 is a user per se of the cellular phone 1 in the general use of the video phone function.

The control circuit 101 compares the variation (difference value) Dv between two frame images by the differential operation function 111 of the image processing circuit 106 with a predetermined specific value Th by means of the comparison judgment function 112. As a result of comparison, in the case where it is judged that the variation is equal to or lower than the specific value (predetermined threshold value) Th, and there is no change between those two frame images, the control circuit 101 generates control information (hereinafter referred to as "transmission stop notice SI") which is for announcing that the transmission of the image data to the cellular phone 1B is stopped. The control circuit 101 of the cellular phone 1A generates the transmission stop notice SI by means of the notice generation function 113. In addition, the control circuit 101 transmits the transmission stop notice SI to the cellular phone 1B through the base band circuit 104, the radio circuit 103, and the antenna 102. Then, the control circuit 101 stops only the transmission of the image data among the transmission and reception operation of the image data and the voice data which is performed after the start of the video phone communication. The operation state continues until that the variation between two new frame images that are sequentially inputted to the image processing circuit 106 exceeds a predetermined value (specific value Th) is detected by the differential operation function 111, or the call end operation by the user is detected.

On the other hand, in the cellular phone 1B, the reception of the transmission stop notice SI is monitored by the notice monitor function 114 of the control circuit 101. Then, upon receiving the transmission stop notice SI, the control circuit 101 starts the display of the still image on the basis of the image data (latest image data) that has been finally received from the cellular phone 1A and continues the voice call.

The control circuit 101 of the cellular phone 1A generates control information (hereinafter referred to as "transmission restart notice TI") for announcing that the transmission of the imaged data to the cellular phone 1B is restarted in accordance with the detected result of the differential operation function 111. More specifically, the control circuit 101 of the cellular phone 1A generates the transmission restart notice TI when it is detected, by the differential operation function 111, that the variation between the two new frame images that are sequentially inputted to the image processing circuit 106 exceeds the specific value Th. In addition, the control circuit 101 transmits the transmission restart notice TI to the cellular phone 1B through the base band circuit 104, the radio circuit 103, and the antenna 102. Then, the control circuit 101 restarts the transmission of the image data which has been stopped after the transmission stop notice SI has been transmitted. The operation state continues until that the variation between two new frame images that are sequentially inputted to the image processing circuit 106 is again equal to or lower than specific value Th is detected by the differential operation function 111, or the call end operation by the user is detected.

On the other hand, in the cellular phone 1B, the reception of the transmission restart notice TI is monitored by the notice monitor function 114 of the control circuit 101. Then, upon receiving the transmission restart notice TI, the control circuit 101 starts the display of the moving picture on the basis of the image data that is sequentially received from the cellular phone 1A and continues the voice call.

Then, the functions of the respective parts of the cellular phone 1 shown in FIG. 1 will be described in more detail along a flow of image data at the time of video phone communication.

(Operation as a transmitter)

First, the operation of the cellular phone 1 (cellular phone 1A) as a transmitter will be described. The cellular phone 1A principally transmits the voice data and the image data to a base station (not shown) during the video phone communication. In this embodiment, the transmission of the image data is performed in the case where there is a difference that exceeds the predetermined value (specific value Th) between two time-series frame images of the image photographed by the camera 105 as described above.

That is, during the execution of the video phone communication, the camera 105 photographs the user of the cellular phone 1A according to an instruction from the control circuit 101. The camera 105 outputs image data of the photographed image to the image processing circuit 106 in one frame unit. The image processing circuit 106 subjects inputted image data to arbitrary image processing (forexample, adjustment of brightness or contrast, etc.). The control circuit 101 saves the image data that has been subjected to the image processing in the storage device 109 once. In this embodiment, the storage device 109 saves image data of two frames which are continuous in time series and consists of image data of the frame image before one frame and image data of the latest frame.

The control circuit 101 transfers the image data of the two new and old frames which are saved within the storage device 109 to the image processing circuit 106. The image processing circuit 106 calculates the amount of difference between image data of the two frames by means of the differential operation function 111. Then, the image processing circuit 106 notifies the data difference amount to the control circuit 101 as a difference value Dv obtained by quantifying the data difference value.

In the calculation procedure of the difference amount between the image data of the two frames, various general methods can be applied currently. Therefore, the detailed description in this embodiment will be omitted.

Also, in this embodiment, for convenience of description, the control circuit 101 and the image processing circuit 106 are constituted as separate devices. However, the control circuit 101 and the image processing circuit 106 are not limited to the above device structure, but the device structure including the image processing circuit 106 in the control circuit 101 may be applied.

Subsequently, in the control circuit 101, the comparison judgment function 112 compares the notified difference value Dv with the predetermined specific value Th, and judges the magnitude relation of the calculated difference value Dv and the specific value Th. The control circuit 101 reads the image data of the latest frame that is saved in the storage device 19 from the RAM 152 in the case where the judgment result is equal to or higher than the specific value Th. Then, the control circuit 101 converts the image data of the latest frame and the voice data corresponding to the voice of the user which is inputted to the microphone 121 into modulated signals by means of the baseband circuit 104 as data within the transmission traffic channel (TCH) data. The radio circuit 103 radiates the modulated signals toward an aerial through the antenna 102 as radio signals after the modulated signals have been up-converted to a predetermined ling frequency.

The control circuit 101 realizes the data transmission of the moving picture and the voice while executing the above sequence of operations for each of the image data of the two frames that are continuous in time series.

Also, the control circuit 101 generates the transmission stop notice SI by means of the notice generation function 114 in the case where it is judged by the comparison judgment function 112 that the difference value Dv that has been notified from the image processing circuit 106 is equal to or lower than the specific value Th. Then, the control circuit 101 notifies the transmission stop notice SI to the cellular phone 1B, which functions as a receiver, through the radio circuit 103 and the base band circuit 104 by using an additional information bit within the TCH data to be transmitted. After that, the control circuit 101 stops the transmission operation of the image data, and switches to the voice call operation including no image data within the TCH data.

After that, the control circuit 101 generates the transmission restart notice TI by means of the notice generation function 114 in the case where the comparison operation result between the difference value Dv and the specific value Th is returned to the specific value Th or higher. The control circuit 101 notifies the transmission restart notice TI to the cellular phone 1B through the radio circuit 103 and the base band circuit 104 by using the additional information bit within the TCH data to be transmitted. After that, the control circuit 101 restarts the video phone operation including the moving picture and voice by restarting the transmission operation of the image data.

(Operation as a receiver)

Then, the operation of the cellular phone 1 (cellular phone 1B) as the receiver will be described. The cellular phone 1B receives the voice data and the image data from the base station (not shown) in principle during the video phone communication. In this embodiment, the reception of the image data is performed in the case where there is a difference that exceeds the specific value Th between the two time-series frame images of the images photographed by the camera 10, as described above.

That is, during the execution of the video phone communication, the radio circuit 103 receives a radio signal from the aerial through the antenna 102. Then, the radio circuit 103 demodulates the received radio signal by means of the base band circuit 104 after being down-converted from the line frequency. The demodulated data includes image data and voice data, and each of the image data and the voice data is inputted to the control circuit 101.

The control circuit 101 outputs the inputted voice data by means of a speaker 122 as a voice. Also, the control circuit 101 outputs the inputted image data to the image processing circuit 106. In this situation, the image processing circuit 106 subjects the image data to arbitrary image processing (for example, the adjustment of brightness or contrast, etc.), to thereby restore the image data of one frame. The control circuit 101 saves the image data of one frame which has been restored by the image processing circuit 106 in the storage device 109 once. Then, the control circuit 101 displays a moving picture on the display device 107 on the basis of the image data that has been saved in the storage device 109.

The above operation is performed for the respective received frame image data, to thereby realize the reception and display of the moving picture data.

Also, in the cellular phone 1B as the receiver, the control circuit 101 always monitors the reception of the following signals by means of the notice monitor function 113 during the execution of the above series of operations. That is, there is a case where the transmission stop notice SI or the transmission restart notice TI is included in the additional information bit within the received TCH data which is transmitted from the cellular phone 1A as described above. Accordingly, the cellular phone 1B as the receiver monitors whether or not the transmission stop notice SI or the transmission restart notice TI is included in the additional information bit within the received TCH data which is demodulated on the basis of the received radio signal.

The control circuit 101 cannot receive new image data after the notice monitor function 113 detects the transmission stop notice SI within the received TCH data . Accordingly, the control circuit 101 displays the still picture on the display device 107 on the basis of the image data (latest image data) that has been finally saved in the storage device 109, and continues the voice call operation on the basis of the voice data.

Also, the control circuit 101 can sequentially receive the new image data after the notice monitor function 113 detects that the transmission restart notice TI is included in the received TCH data. Accordingly, the control circuit 101 displays the moving picture on the display device 107 on the basis of the image data that is sequentially updated in the storage device 109 according to the newly received TCH data, and continues the voice call operation on the basis of the voice data.

The RAM 152 and the storage device 109 may be realized in two separate areas within the physically same device.

Also, in a procedure of transmitting the user' s voice that is inputted to the microphone 121 as the radio signal, and in a procedure of outputting the voice that has been received as the radio signal to the speaker 122 as a voice (acoustic), a general procedure can be applied. Accordingly, the detailed description of this embodiment will be omitted.

(Image transmission control process)

Then, a description will be given of image transmission control that is executed by the cellular phone 1 (cellular phone 1A) as the transmitter in order to realize the operation as the above-mentioned transmitter.

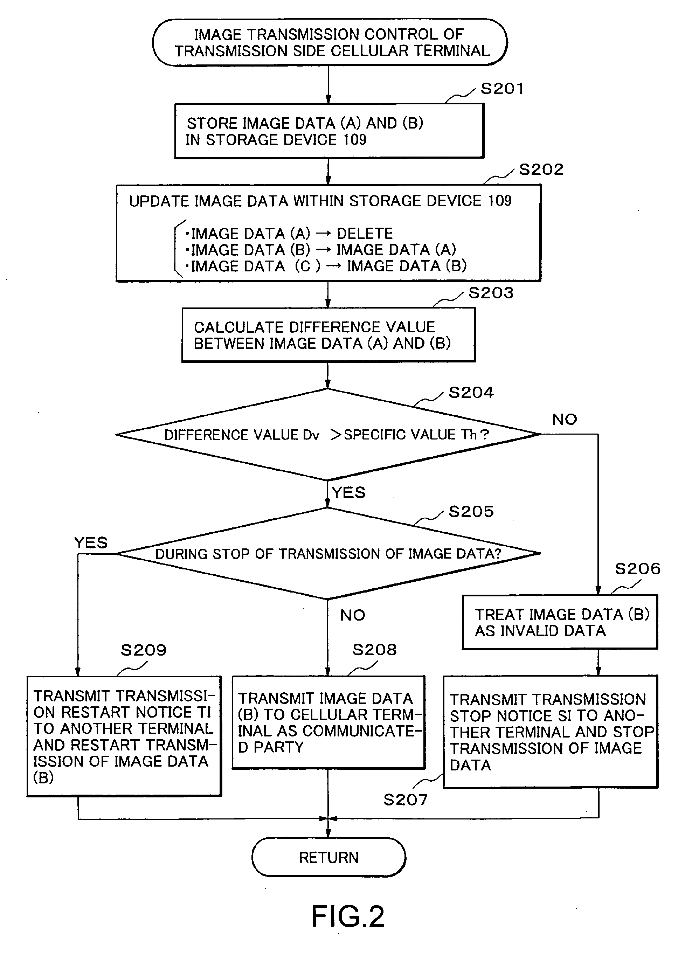

FIG. 2 is a flowchart showing an image transmission control process which is executed by the cellular phone 1 in this embodiment. The flowchart represents a processing procedure of a software program that is executed by the CPU 151 in the control circuit 101 shown in FIG. 1.

The CPU 151 of the control circuit 101 instructs a photograph operation to the camera 105 and stores the image data of the photographed two frames in the storage device 109 according to the user's selection of execution of the video phone function (step 201). That is, the CPU 151 stores the image data of the continuous two frame images among the frame images that are inputted to the image processing circuit 106 from the camera 105 in the time series in the storage device 109. In this situation, the storage device 109 stores the image data of the frame image before one frame and the image data of the latest frame, which are continuous in time series.

In the following description, the image data of the frame image before one frame is called "image data (A) ", and the image data of the latest frame is called "image data (B) " . In addition, a third frame image that is acquired newly is called "image data (C) ".

The CPU 151 updates the image data that has been temporarily stored within the storage device 109 (Step S202) . That is, the CPU 151 deletes the image data (A) that has been stored before from the storage device 109 when the CPU 151 stores the image data (C) subsequent to the image data (B) in the storage device 109. Then, the CPU 151 saves the image data (B) as the image data (A) and the image data (C) as the image data (B).

Subsequently, the CPU 151 transfers the image data (A) and the image data (B) within the storage device 109 to the image processing circuit 106 so as to detect the presence and absence of the movement between the stored two frame images. In this situation, the image processing circuit 106 calculates an amount of difference between the image data of the two frames by means of the differential operation function 111. Then, the CPU 151 acquires the difference value Dv obtained by quantifying the difference value from the image processing circuit 106 (Step S203). In the case where the control circuit 101 per se has the function of the image processing circuit 106 (differential operation function 111) , the difference value Dv may be directly calculated by the control circuit.

The CPU 151 executes the comparison judgment function 112 to compare the difference value Dv with the specific value Th that has been registered in the storage device 109 or the like in advance. Then, the CPU 151 proceeds with Step S205 if the difference value Dv is larger than the specific value Th, and proceeds with Step S206 if the difference value Dv is equal to or lower than the specific value Th (Step S204) . In this case, the CPU 151 has the image data (B) of the latest frame which has been saved in the storage device 109 as effective data.

In the case where it is judged in Step S204 that the difference value Dv is larger than the specific value Th, the CPU 151 should transmit the image data to the cellular phone 1B. In the case where the CPU 151 stops transmitting the image data before a previous control cycle, the CPU 151 must notify the restart of transmission of the image data to the cellular phone 1B. Therefore, the CPU 151 judges whether the transmission of the image data to the cellular phone 1B has been already stopped, or not (Step S205) . This judgment can be readily made with the general processing structure, for example, turning on a predetermined internal flag, in accordance with the transmission of the transmission stop notice S1, for example, in Step S207 which will be described later.

Then, in the case where it is judged in Step S205 that the transmission of the image data has been already stopped, the CPU 151 transmits the transmission restart notice TI to the cellular phone 1B, and restarts the transmission of the image data (B) which is the latest frame (Step S209) . On the other hand, in the case where it is judged in Step S205 that the image data is being transmitted, the CPU 151 continues to transmit the image data (B) which is the latest frame to the cellular phone 1B (Step S208).

On the other hand, in the case where it is judged in Step S204 that the difference value Dv is smaller than the specific value Th, there is substantially no difference between the two frame images to be compared (that is, the movement of the object to be photographed). Accordingly, in this case, the radio transmission power of the cellular phone 1A should be reduced (that is, the power consumption should be reduced) by stopping the transmission of the unnecessary image data.

Therefore, the CPU 151 sets the image data (B) of the latest frame which has been saved in the storage device 109 as invalid data (Step S206) . Then, the CPU 151 transmits the transmission stop notice S1 to the cellular phone 1B, and stops the transmission of the image data (B) (Step S207). As a result, the CPU 151 stops the transmission of the image data (B) which has been continuously performed till the previous control cycle.

Then, the CPU 151 returns the processing to Step S201 after executing the processing of S207 to S209, and also continues the above sequence of processing until the call end operation by the user is detected. That is, in this embodiment, the cellular phone 1A continues photographing by means of the camera 105 and updating of the image data within the storage device 109 even during stopping of transmission of the image data.

(Image reception control process)

Subsequently, a description will be given of the image reception control that is executed by the cellular phone 1 (cellular phone 1B) as the receiver in order to realize the operation as the above receiver.

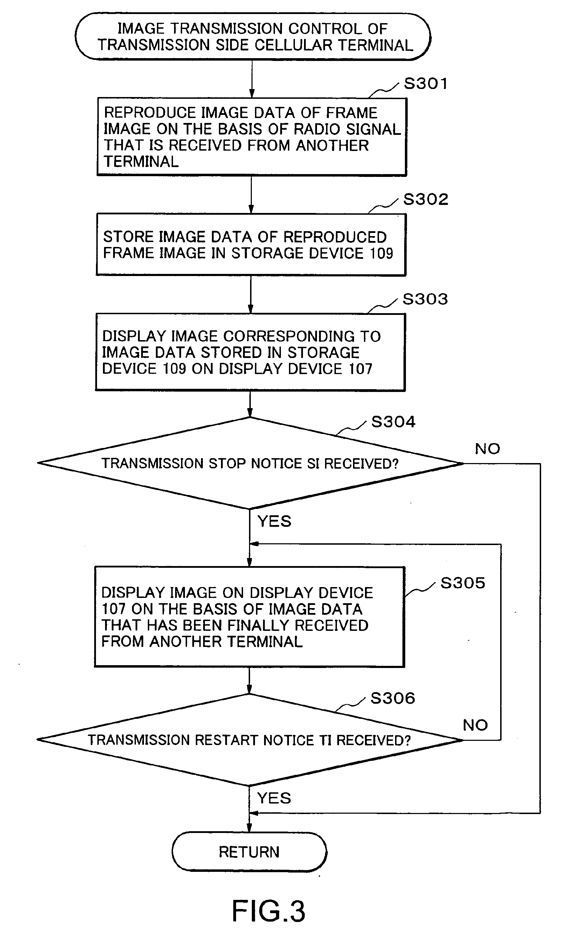

FIG. 3 is a flowchart showing an image reception control process which is executed by the cellular phone 1 in this embodiment. The flowchart represents a processing procedure of a software program which is executed by the CPU 151 in the control circuit 101 shown in FIG. 1.

In the control circuit 101, the CPU 151 reproduces the image data of a frame unit by demodulating and binarizing the received signal that has been received from the cellular phone 1A by means of the radio circuit 103 and the base band circuit 104 (Step S301).

The CPU 151 stores the reproduced image data of one frame in the storage device 109 (Step S302) . Then, the CPU 151 displays an image on the display device 107 on the basis of the image data that has been stored in the storage device 109 in Step S302 (Step S303).

Subsequently, the CPU 151 executes the notice monitor function 113, to thereby judge whether the transmission stop notice SI is included in the radio signal that has been received from the cellular phone 1A, or not (Step S304). In this embodiment, the transmission stop notice SI and the transmission restart notice TI are notified by using the additional information within the received TCH data.

The cellular phone 1A stops the transmission of the image data which has been performed up to now after transmitting the transmission stop notice SI. Accordingly, the cellular phone 1B cannot acquire the image data of a new frame image for displaying the moving picture in the case where the reception of the transmission stop notice SI is detected by the judgment in Step S304. Therefore, the CPU 151 displays the image (still picture) on the display device 107 on the basis of the latest image data that has been finally received from the cellular phone 1A (Step S305). Then, the CPU 151 continues the display of the still picture in Step S304 until it is judged in Step 5306 that the transmission restart notice TI is included in the radio signal that has been received from the cellular phone 1A. In this situation, the CPU 151 continues to reproduce the voice data since the CPU 151 receives the transmission stop notice SI until the CPU 151 receives the transmission restart notice TI (Step S305, Step S306) . Accordingly, during that, the user continues the voice call while viewing the still picture that is displayed on the display device 107.

By the way, while the still picture is displayed in Step S305 and Step S306, the CPU 151 continuously uses the image data that has been finally saved in the storage device 109. In this example, the image data that has been finally saved is image data of one frame which has been saved in the storage device 109 in Step S301 in the control cycle immediately before receiving the transmission stop notice SI. In other words, this means that while the still picture continues to be displayed in a loop of Step S305 and Step S306, the CPU 151 does not execute the following processes:

- a process of reproducing the image data on the basis of the radio signal (Step S301);
- a process of storing the reproduced image data (Step S302); and
- a process of reading the image data that is stored in the storage device 109 and displaying the new frame image on the display device 107 on the basis of the read image data (Step S303).

Accordingly, in the cellular phone 1B, the power consumption can be reduced as much as Step S301 to Step S303 are not executed while the still picture is continuously displayed as compared with a case where Steps S301 to S303 are executed in every control cycle. Accordingly, even in the cellular phone 1B, the battery life of the battery 150 can be extended.

The CPU 151 returns the processing to Step S301 in the case of detecting the transmission restart notice TI in Step S305. Then, the CPU 151 displays a moving picture based on image data that is received newly in the storage device 109 on the display device 107 while sequentially updating the image data until again detecting the transmission stop notice SI in Step S303. Accordingly, the user conducts voice call while viewing the moving picture that is displayed on the display device 107.

(Advantages of the embodiment)

The present invention described above provides the following advantages.

That is, the cellular phone 1A stops the transmission of the image data even during execution of the video phone communication in the case where the difference (movement) Dv between the image data of two frame images that are continuous in time series is smaller than the specific value Th. As a result, the transmission power of the cellular phone 1 as the transmitter can be reduced, and hence the power consumption can be reduced. Accordingly, the battery life of the battery 150 can be extended, and hence the convenience of the cellular phone 1 is improved.

Also, in this embodiment, the still picture is displayed by the cellular phone 1B in the case where no large change (movement) is found in the state of the object to be photographed at the transmission side. Then, in the case where the object to be photographed is changed, the display of the moving picture is restarted immediately in the cellular phone 1B. Accordingly, there is no case where an uncomfortable feeling is given to the user of the cellular phone 1 as the receiver.

In addition, in this embodiment, the cellular phone 1B is not required to perform the process of reproducing the image data based on the received radio signal and the process of storing the reproduced image data since the cellular phone 1B receives the transmission stop notice SI until the cellular phone 1B receives the transmission restart notice TI. Accordingly, even in the cellular phone 1 as the receiver, the power consumption can be reduced. Therefore, the battery life of the battery 150 can be extended, and hence the convenience of the cellular phone 1 is improved.

Also, the cellular phone 1A stops the transmission of the image data as described above, to thereby reduce the radio traffic in the communication system. As a result, this contributes to the efficient use of a limited line subscriber capacity of the radio communication system.

Also, in this embodiment, the cellular phone 1A continues photographing by the camera 105 and updating of the image data within the storage device 109 even during the stop of transmission of the image data. That is, there is no case where the power supply to the camera 105 is interrupted during the video phone communication. Accordingly, in this embodiment, in the cellular phone 1 as the transmitter, there is no need to take a period of time taken till the stabilization of operation with restart of power dispatching to the camera into account, which is different from JP 2001-136423 A described in the above "background of the invention". That is, according to the cellular phone 1 of this embodiment, there is no case where the operation feeling is sacrificed for achieving a reduction in power consumption.

(Modification of this embodiment)

(First modification)

In the above embodiment, the cellular phone 1 that realizes the video phone function by means of voice and moving picture has been exemplified. However, in the present invention, from the viewpoint of realizing the reduction in power consumption of a communication terminal and reduction in radio traffic in a radio communication system that accommodates the communication terminal, the video phone function and the transmission and reception of the voice data are not essential. That is, the present invention is preferably applied to a system in which image data for reproducing a moving picture bymeans of a reception side communication terminal is sequentially transmitted to the reception side communication terminal from a transmission side communication terminal.

More specifically, in the above embodiment, the reduction in the power consumption of the cellular phone 1A at the time of the video phone communication is realized, and the reduction in the radio traffic by stopping the transmission of the image data is also realized. However, the present invention is not limited to the communication system of the cellular phone. For example, the present invention can be also applied to a monitor system that is made up of an image monitor terminal that sends moving picture data and an image processing device that receives the moving picture data.

(Second modification)

In the above embodiment, in the cellular phone 1A, attention is paid to the difference between the image data of the frame image before one frame and the image data of the latest frame among the image data of the frame images which are sequentially produced in time series to constitute the processing. However, the present invention is not limited to the above processing structure. That is, the present invention may be constituted to select two frame images whose difference is to be calculated by using a frame interval (for example, five-frame interval) specified in advance instead of calculating the difference at every frame interval (two continuous frame images) . Also, in the case where the second modification is applied to, for example, the structure of the cellular phone 1 shown in FIG. 1, the selection of the two frame images may be autonomously performed by the image processing device 106, or may be performed in the process of updating the image data within the storage device 109 by the control circuit 101. The second modification is preferably applied to a case where the frame rate of the camera 105 (that is, the number of frame images that are photographed per unit time) is high in speed. Then, when the frame images which should be subjected to difference calculation are selected as in this modification, a load of the operation processing can be reduced, and hence power saving of the terminal and an improvement in the performance of the device can be expected.

(Third modification)

In the above embodiment, in the process of updating the image data (Step S202 in FIG. 2), the image data (A) is deleted, and the image data (B) is updated to the image data (A) whereas the image data (C) is updated to the image data (B). That is, in the updating process, the frame image as a reference is updated to the latest frame image in every control cycle. In contrast, in this modification, the frame image as the reference of comparison is fixed to the image data (A) during stop of transmission of the image data. More specifically, the image data (A) is kept as it is, the image data (B) is deleted, and the image data (C) is updated to the imaged data (B) during stop of transmission of the image data. According to such a processing structure, the load of the operation processing can be reduced, and hence the power saving of the terminal and an improvement in the performance of the device during stop of transmission of the image data can be further expected.

In the above embodiment, the cellular phone 1 having the device structure in which the camera 105 that photographs a frame image is integrated with the communication terminal has been exemplified. However, the present invention is not limited to the above device structure. That is, the present invention can be applied to even a device structure in which a communication terminal that transmits image data is separated from an image pickup device that photographs a frame image which is the original of the image data.

Also, in the above embodiment, for convenience of description, the reference value Th to which the CPU 151 refers at the time of executing the difference operation has the same value (threshold value) between a case where the transmission of the image data is stopped and a case where the transmission of the image data is restarted. However, a different value may be applied to the threshold value at the time of executing the difference operation. In this case, the reference value (Th1) at the time of stopping the transmission is set to be larger than the reference value (Th2) at the time of restarting the transmission, thereby permitting the transmission operation in the cellular phone 1A to be stabilized.

Also, the present invention that has been exemplified by way of the above embodiment and its modifications is achieved by reading a computer program that can realize the functions of the flowcharts (FIGS. 2 and 3) referred to in the above description to the CPU 151 of the device and executing the computer program after the computer program is supplied to the above cellular phone 1. Also, the computer program that is supplied to the device may be stored in a storage device such as a readable and writable memory.

In the above case, a method of supplying the computer program to each device can currently adopt a general procedure such as a method involving installing the computer program into the device by using an appropriate jig or a method involving downloading the computer program from the external through a communication line such as the Internet, at the manufacturing stage before shipping, at the maintenance stage after shipping, or the like. Then, in this case, the present invention is constituted by codes or storage medium of the computer program.

While this invention has been described in connection with certain preferred embodiments, it is to be understood that the subject matter encompassed by way of this invention is not limited to those specific embodiments. On the contrary, it is intended for the subject matter of the invention to include all alternative, modification and equivalents as can be included within the spirit and scope of the following claims.

**Claims**

1. A method of reducing power consumption in a communication terminal that transmits and receives image data, **characterized by** comprising:

   stopping transmission of new image data from a transmission side communication terminal (1A) to a reception side communication terminal (1B) in a duration where a difference between image data inputted in time series is smaller than a predetermined value; and displaying an image, on said reception side communication terminal (1B), on the basis of image data that has already been received in a duration where said reception side communication terminal cannot receive the new image data from said transmission side communication terminal (1A).

2. The method according to claim 1, **characterized in that** the image displayed on said reception side communication terminal (1B) is a still picture based on the latest image data that is received before said reception side communication terminal (1B) cannot receive the new image data.

3. The method according to claim 1 or 2, **characterized in that** the input image data to be compared with the predetermined value is image data of two frame images in question among image data of a plurality of frame images that are inputted in time series.

4. The method according to claim 3, **characterized in**

**that** the image data of two frame images in question is image data of two frame images that are continuous in time series.

5. The method according to claim 3, **characterized in that** the image data of two frame images in question is image data of two frame images that are at a predetermined frame interval among the image data of a plurality of frame images that are inputted in time series.

6. A communication system that accommodates communication terminals that transmit and receive image data, **characterized by** comprising:

   a transmission side communication terminal (1A) that stops transmission of new image data in a duration where a difference between image data inputted in time series is smaller than a predetermined value; and
   a reception side communication terminal (1B) that displays an image on the basis of image data that has already been received in a duration where said reception side communication terminal (1B) cannot receive the new image data from said transmission side communication terminal (1A).

7. The communication system according to claim 6, **characterized in that** said reception side communication terminal (1B) displays a still picture based on the latest image data that is received before said reception side communication terminal (1B) cannot receive the new image data.

8. The communication system according to claim 6 or 7, **characterized in that**, in said transmission side communication terminal (1A), inputs image data to be compared with the predetermined value is image data of two frame images in question among image data of a plurality of frame images that are inputted in time series.

9. The communication system according to claim 8, **characterized in that** the image data of two frame images in question is image data of two frame images that are continuous in time series.

10. The communication system according to claim 8, **characterized in that** the image data of two frame images in question is image data of two frame images that are at a predetermined frame interval among the image data of a plurality of frame images that are inputted in time series.

11. The communication system according to any one of claims 6 to 10, **characterized in that** said communication system is a radio communication system that accommodates said transmission side communication terminal (1A) and said reception side communication terminal (1B).

12. The communication system according to claim 11, **characterized in that** said radio communication system is a radio phone communication system based on a wideband communication system, and
    said transmission side communication terminal (1A) and said reception side communication terminal (1B) which are cellular phones continue the transmission and reception operation of new voice data even during stop of transmission of the image data.

13. A communication terminal (1) that transmits and receives image data, **characterized by** comprising control means (101, 106, 151) for stopping transmission of new image data to a reception side communication terminal (1B) in a duration where a difference between the image data inputted in time series is smaller than a predetermined value when the self terminal (1) functions as said transmission side communication terminal (1A) .

14. The communication terminal according to claim 13, **characterized in that** said control means displays an image on the basis of the image data that has already been received in a duration where the new image data cannot be received when the self terminal functions as said reception side communication terminal (1B).

15. The communication terminal according to claim 14, **characterized in that** said control means displays a still picture on the basis of the latest image'data that has been received before the new image data cannot be received.

16. The communication terminal according to any one of claims 13 to 15, **characterized in that** input image data to be compared with the predetermined value is image data of two frame images in question among image data of a plurality of frame images that are inputted in time series.

17. The communication terminal according to claim 16, **characterized in that** the image data of two frame images in question is image data of two frame images that are continuous in time series.

18. The communication terminal according to claim 17, **characterized in that** the image data of two frame images in question is image data of two frame images that are at a predetermined frame interval among the image data of a plurality of frame images that are inputted in time series.

**19.** The communication terminal according to any one of claims 13 to 18, **characterized in that** the communication system is a radio communication system that accommodates said transmission side communication terminal (1A) and said reception side communication terminal (1B).

**20.** The communication terminal according to claim 19, **characterized in that** said radio communication system is a radio phone communication system based on a wideband communication system, and said transmission side communication terminal (1A) and said reception side communication terminal (1B) which are cellular phones continue the transmission and reception operation of new voice data even during stop of transmission of the image data.

**21.** The communication terminal according to claim 20, **characterized in that** each of said transmission side communication terminal (1A) and said reception side communication terminal (1B) which are cellular phones further comprises an image pickup device (105) that supplies image data of the photographed image to said control means.

**22.** A computer program for operation control of a communication terminal (1) that transmits and receives image data, **characterized in that** the computer program allows a computer to implement a control function of stopping transmission of new image data to a reception side communication terminal (1B) in a duration where a difference between the image data inputted in time series is smaller than a predetermined value when the self terminal (1) functions as a transmission side communication terminal (1A).

**23.** The computer program according to claim 22, **characterized in that** said computer program allows the computer to implement a control function of displaying an image on the basis of the image data that has already been received in a duration where the new image data cannot be received when the self terminal functions as said reception side communication terminal (1B).

FIG.1

IMAGE TRANSMISSION CONTROL OF
TRANSMISSION SIDE CELLULAR TERMINAL

S201

STORE IMAGE DATA (A) AND (B)
IN STORAGE DEVICE 109

S202

UPDATE IMAGE DATA WITHIN STORAGE DEVICE 109

- IMAGE DATA (A) → DELETE
- IMAGE DATA (B) → IMAGE DATA (A)
- IMAGE DATA (C ) → IMAGE DATA (B)

S203

CALCULATE DIFFERENCE VALUE
BETWEEN IMAGE DATA (A) AND (B)

S204

DIFFERENCE VALUE Dv ＞SPECIFIC VALUE Th ?

NO

YES

S205

DURING STOP OF TRANSMISSION OF IMAGE DATA?

YES

NO

S206

TREAT IMAGE DATA (B)
AS INVALID DATA

S209

TRANSMIT TRANSMISSI-
ON RESTART NOTICE TI
TO ANOTHER TERMINAL
AND RESTART TRANSM-
ISSION OF IMAGE DATA
(B)

S208

TRANSMIT IMAGE DATA
(B) TO CELLULAR TERM-
INAL AS COMMUNICATE-
D PARTY

TRANSMIT TRANSMISSION
STOP NOTICE SI TO ANO-
THER TERMINAL AND STOP
TRANSMISSION OF IMAGE
DATA

S207

RETURN

FIG.2

IMAGE TRANSMISSION CONTROL OF
TRANSMISSION SIDE CELLULAR TERMINAL

S301

REPRODUCE IMAGE DATA OF FRAME
IMAGE ON THE BASIS OF RADIO SIGNAL
THAT IS RECEIVED FROM ANOTHER
TERMINAL

S302

STORE IMAGE DATA OF REPRODUCED
FRAME IMAGE IN STORAGE DEVICE 109

S303

DISPLAY IMAGE CORRESPONDING TO
IMAGE DATA STORED IN STORAGE
DEVICE 109 ON DISPLAY DEVICE 107

S304

TRANSMISSION STOP NOTICE SI RECEIVED?    NO

YES

DISPLAY IMAGE ON DISPLAY DEVICE
107 ON THE BASIS OF IMAGE DATA
THAT HAS BEEN FINALLY RECEIVED
FROM ANOTHER TERMINAL    S305

S306

TRANSMISSION RESTART NOTICE TI RECEIVED?    NO

YES

RETURN

FIG.3